# EUROPEAN PATENT SPECIFICATION

(11) **EP 2 013 095 B1**
(45) Date of publication and mention of the grant of the patent: **01.08.2012**
(21) Application number: 07724021.6
(22) Date of filing: 04.04.2007
(51) Int. Cl.: B65D 5/50, B65D 77/04

(54) **User-portable radio telephone delivery container, related blank and method**
Versandbehälter für Funktelefon, zugehöriger Zuschnitt und Verfahren
Conteneur de distribution de téléphone sans fil portatif, découpe associée et procédé

(30) Priority: 21.04.2006 GB 0607912
(43) Date of publication of application: 14.01.2009
(73) Proprietor: Nokia Corporation, 02150 Espoo (FI)
(72) Inventor: MATTILA, Mika, 36110 Ruutana (FI)
(74) Representative: Higgin, Paul
(86) International application number: PCT/EP2007/003080
(87) International publication number: WO 2007/121841

(56) References cited:
- DE-U1- 8 715 650
- DE-U1- 20 008 952
- US-A- 5 529 174

## Description

The invention relates to user-portable radio telephone delivery containers and to related apparatus and methods.

### Background of the Invention

User-portable radio telephones, hereinafter referred to more conveniently as telephones or mobile telephones, are typically presented for sale and/or delivery to an end user in suitable containers such as retail packages. Retail packages typically incorporate a printed branded design on one or more exterior surfaces in order to be more attractive to the end user or purchaser of the telephone. Such a retail package may also be designed and decorated to enhance the "opening experience" for the end user. When mobile telephones are, instead of being purchased in a retail environment, delivered to an end user, the same retail packaging may be used, with the packaging being commonly packed inside a larger outer box for delivery. The outer box provides a degree of security and protection against handling damage. The outer box is also typically relatively plain in visual appearance by comparison with the retail packaging box, so as to reduce the possibility of theft.

For example, a retail package may be decorated with attractive imagery and branded with logos associated with the manufacturer of the telephone within. The package may also be designed such that it is provided with a hinged lid, so that the opening experience for the end user involves attractively presenting the contents to the user in a predetermined arrangement. Within the package, the telephone and its several associated components such as a battery, an electrical charger, an instruction manual and a headset are typically held in various compartments. The end user is then presented with the components in a predetermined way.

Many retail packaging components are typically optimised in various ways, which may depend upon, amongst other things, the number and types of components included with the telephone, as well as the size of the telephone itself, the point of sale environment in which the packaging is to be displayed and the type of branding on the packaging. Little thought, however, is conventionally given to how the end user is to physically receive the telephone. This last point may not be an overriding issue when the end user receives the mobile telephone within its retail packaging in a retail environment, since as long as the user can carry the package away, the size and shape of the package is relatively unimportant.

When products are available for ordering via the internet, delivery of the physical goods being ordered often depends on being able to either: i) have the goods delivered to the purchaser personally due to the size or value of the goods; or ii) being able to fit the packaged goods through a delivery slot, i.e. a letter box, at an address of the purchaser. Being available personally to receive the goods can be an inconvenience for the purchaser, particularly if delivery can only be attempted during normal working hours, when the purchaser may not be at home. Even if deliveries can be made outside of normal working hours, these would tend to be more expensive and there would still be no guarantee that the purchaser will be at home when a delivery is attempted. Many goods are packaged in containers that are too large to be delivered to a purchaser's home letter box, and repeated failed delivery attempts are consequently common, resulting in additional cost and inconvenience.

One possible prior art solution is to package the various components in a padded envelope rather than a rigid container. This approach is, however, generally unacceptable for aesthetic reasons and because a common style of packaging would not be suitable for both delivery and for retail packaging. Additionally, the opening experience for the user would be less desirable, as the various components would be more likely to be jumbled in the envelope, and not presented to the user on opening in an aesthetically pleasing way.

For mobile telephones, since the packaging is typically designed more for attractiveness and the ability to store all the commonly necessary components to be sold with the telephone itself, the retail packaging is invariably too large to fit within a typical delivery slot such as in a home letter box. A problem therefore remains when the mobile telephone is ordered for delivery to the end user, in that the user is inconvenienced when delivery has proved to be not possible. The end user may then have to alternatively: i) be present for another delivery attempt; ii) visit a delivery depot to collect the package, thus causing inconvenience for the user and additional cost for the delivery company; or iii) arrange to have the delivery redirected to the user's work address (which may not be possible).

A further consideration not often taken into account when designing packaging for mobile telephones is that of the environmental impact of the packaging. When the packaging includes moulded plastic parts such as internal partitioning parts to hold the various components, recycling or waste disposal may be more problematic. It would therefore be advantageous to be able to reduce the environmental impact of the packaging used by using fewer packaging components and, where possible, to make the components either biodegradable or readily recyclable. Minimising the overall size and weight of the packaging would also further the aims of having a reduced environmental impact.

US 5,529,174 discloses a product package that includes a compartment for receiving the product which is defined at least in part by a side wall and a bottom wall, The compartment has a recess generally conforming to a shape of the product. The package also includes a lid overlying the compartment to normally restrict access to the product during shipment and sale thereof. The lid is movable from a closed compartment position to an open compartment position by a purchaser of the product. The package includes a spring for elevating at least a portion of the product from the recess in the compartment. The spring operates when the lid has been moved from the closed compartment position to the open compartment position. The package thus enhances the visibility of the product in the compartment to the purchaser thereof.

DE 20008952 U1 discloses packaging for electronic equipment with accessories.

DE 8715650 U1 discloses packaging for specimen of biopsy, the packaging being adapted to pass through an opening of a letter box for postal deliveries.

### Objects of the Invention

It is an object of the present invention to solve one or more of the above mentioned problems by providing a user-portable radio telephone delivery container that is adapted to pass through a predetermined size of opening for postal deliveries. Such a delivery container may not only be suitable for postal delivery but also for retail sale / display at a store.

It is a further object of the present invention to provide a user-portable radio telephone delivery container that requires fewer individual parts, has a reduced environmental impact and is more flexible in receiving one or more accessories.

### Summary of the Invention

The present invention is as set out in the independent claims.

In a first aspect of the disclosure, there is provided a delivery container for delivering a user-portable radio telephone, the delivery container comprising: an inner container; an outer container adapted to entirely enclose the inner container, the inner container having two or more compartments defined therein, wherein one of the two or more compartments is adapted to be able to contain a user-portable radio telephone and is adapted to be adjustable to receive therein one of a selected range of different sizes of user-portable radio telephones, and wherein another of the two or more of the compartments is configurable in either of a closed configuration and an open configuration, the open configuration being adapted to receive one or more accessories therein; and the outer container adapted to pass through a 30 mm x 250 mm size of opening of a letter box for postal deliveries at a home of an end user of the user-portable radio telephone.

In a second aspect of the disclosure, there is provided a blank for the delivery container of the first aspect, the blank comprising a substantially planar unitary piece of packaging material adapted to, when assembled, form a user-portable radio telephone container, the container comprising: an inner container; an outer container adapted to entirely enclose the inner container, the inner container having two or more compartments defined therein, wherein one of the two or more compartments is adapted to be able to contain a user-portable radio telephone and is adapted to be adjustable to receive therein one of a selected range of different sizes of user-portable radio telephones, and wherein another of the two or more of the compartments is configurable in either of a closed configuration and an open configuration, the open configuration being adapted to receive one or more accessories therein; and the outer container adapted to pass through a 30 mm x 250 mm size of opening of a letter box for postal deliveries at a home of an end user of the user-portable radio telephone.

In a third aspect of the disclosure, there is provided a method of delivering a user-portable radio telephone to an end user, the method comprising the steps of:
receiving from a user at a server an order for a user-portable radio telephone, the order comprising a postal address of the end user of the user-portable radio telephone; transmitting from the server to the order fulfilment facility the postal address of the end user; providing at the order fulfilment facility a delivery container containing the user-portable radio telephone, the delivery container comprising: an inner container; an outer container entirely enclosing the inner container, the inner container having two or more compartments defined therein, wherein one of the two or more compartments is adapted to contain the user-portable radio telephone and is adapted to be adjustable to receive therein one of a selected range of different sizes of user-portable radio telephones and wherein another of the two or more of the compartments is configurable in either of a closed configuration and an open configuration, the open configuration being adapted to receive one or more accessories therein, the outer container adapted to pass through a 30 mm x 250 mm size of opening of a letter box for postal deliveries at a home of the end user of the user-portable radio telephone and the outer container being marked with the postal address of the end user.

### Brief Description of the Drawings

In order that the invention may more readily be understood, a description is now given, by way of example only, reference being made to the accompanying drawings, in which:
Figure 1 is a drawing of a representative prior art packaging container for a mobile telephone and associated components;
Figures 2a to 2c are drawings of an embodiment of the invention for a first size of delivery package;
Figures 3a to 3c are drawings of an embodiment of the invention for a second size of delivery package;
Figure 4 is a drawing of an embodiment of a delivery package of the invention;
Figure 5 is a drawing of the delivery package of Figure 4 with a mobile telephone and associated components contained therein;
Figure 6 is a further drawing of the delivery package of Figure 4, showing the various associated components;
Figure 7 is a perspective view of the delivery package of Figure 4, showing the outer container;
Figure 8 shows four different designs for the appearance of the inner container of the invention;
Figure 9a and 9b show plan views of an inner container comprising adjustable compartments;
Figures 10a to 10d show the inner container of Figures 9a and 9b with an adjustable mobile telephone compartment in different configurations; and
Figures 11a and 11b show the inner container of Figures 9a and 9b with an adjustable accessory compartment in different configurations.

### Detailed Description of the Invention

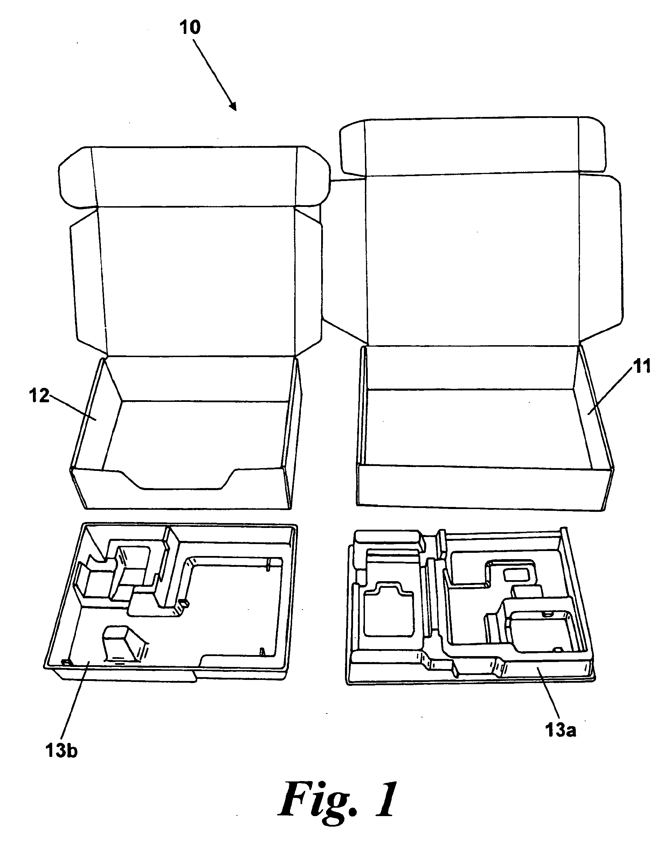

Shown in Figure 1 is a typical prior art user-portable radio telephone container 10. The container 10 comprises an outer container 11, an inner container 12, and two internal partitions 13a, 13b for dividing the internal volume of the inner container into separate compartments suitable for the various components to be held therein.

The inner container 12 and outer container 11 are both typically of substantially cuboid-shape and fabricated from a packaging board such as cardboard, while the internal partitions may be fabricated from a plastically mouldable material such as polyethylene. The internal partitions 13a, 13b of figure 1 may result in an aesthetically unpleasing appearance of the interior of the inner container when opened, due to the first view a user has being the back of a moulding. Also, the partitions are additional components which add to the cost for the overall packaging. Further, the plastics used may not be easily recycled or otherwise readily disposed of in an environmentally benign way.

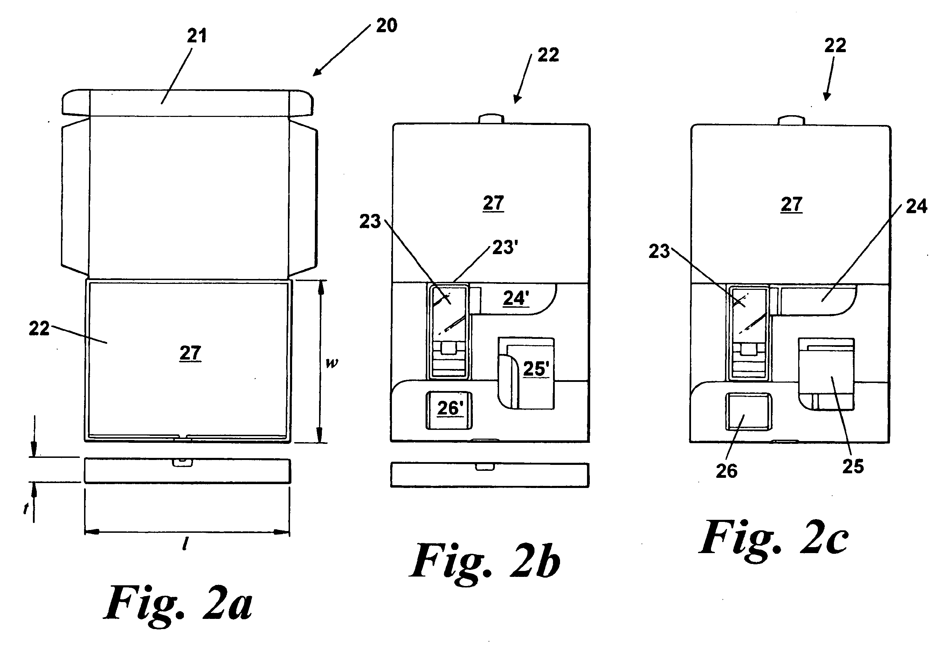

An exemplary embodiment of a design for a user-portable radio telephone delivery container 20 of the invention is shown in Figures 2a to 2c. The delivery container 20 comprises two containers: an inner container 22 which is completely encasable by an outer container 21. Figure 2a shows a plan view of a substantially cuboid-shaped delivery container 20, in a form in which the outer container 21 is open, with the inner container 22 shown therein. The overall dimensions of the outer container, and therefore the overall delivery container, is given in general by a length 1, a width w and a thickness t as indicated in Figure 2a. A rectangular cross-section defined by either the length and thickness, i.e. 1 x t, or by the width and thickness, i.e. w x t, is of a size so as to pass through an opening in a typical letter box. The thickness of the delivery container 20 places a constraint on the design of the internal layout of the inner container 22, shown in Figures 2b and 2c, in that all the components to be contained must fit within the required maximum thickness, additionally allowing for the thickness of the walls of the containers.

Various compartments 23', 24', 25', 26' are formed within the inner container 22 so as to receive respective components 23, 24, 25, 26. Figure 2b shows a mobile telephone 23 in position within a compartment 23', while the other compartments 24', 25', 26' are shown empty. This indicates certain structural features of an embodiment of the invention, in that each compartment 23', 24', 25', 26' is formed from the same material as that defining the inner container 22. The compartments 23', 24', 25', 26' may be made by folding pre-cut and scored sections of a blank from which the inner container 22 is made. Further, as can be seen in Figures 2b and 2c, the various components 23, 24, 25, 26 are arranged to be visible immediately upon opening the lid 27 of the inner container 22.

Figure 2c shows the various components 23, 24, 25, 26 in place within their respective compartments 23', 24', 25', 26' in the inner container 22. In addition to the mobile telephone or transceiver unit 23, these components may be, for example, a paper / electronic user guide and/or software stored on a cd-rom 24, a headset 25 and a battery and/or multimedia card (MMC) 26. Other compartments may also or alternatively be envisaged and arranged within the inner container 22 of the invention, depending upon the desired configuration and the requirements of the user. For example, a charger unit and additional connector cables may be omitted from the container 22, due to one or more reasons of: i) size; ii) the user already being in possession of a suitable charger; or iii) the user being able to obtain a charger from elsewhere.

Provided that all the various components can be contained within the required maximum thickness t of the delivery container, a container of the invention can generally be devised that will fit within a predetermined size of opening of a letter box. The maximum dimensions for a delivery container of the invention may be smaller than 250mm x 400mm x 30mm. Exemplary dimensions for the delivery container 20 of Figures 2a to 2c are t=30mm, w=185mm and 1=225mm.

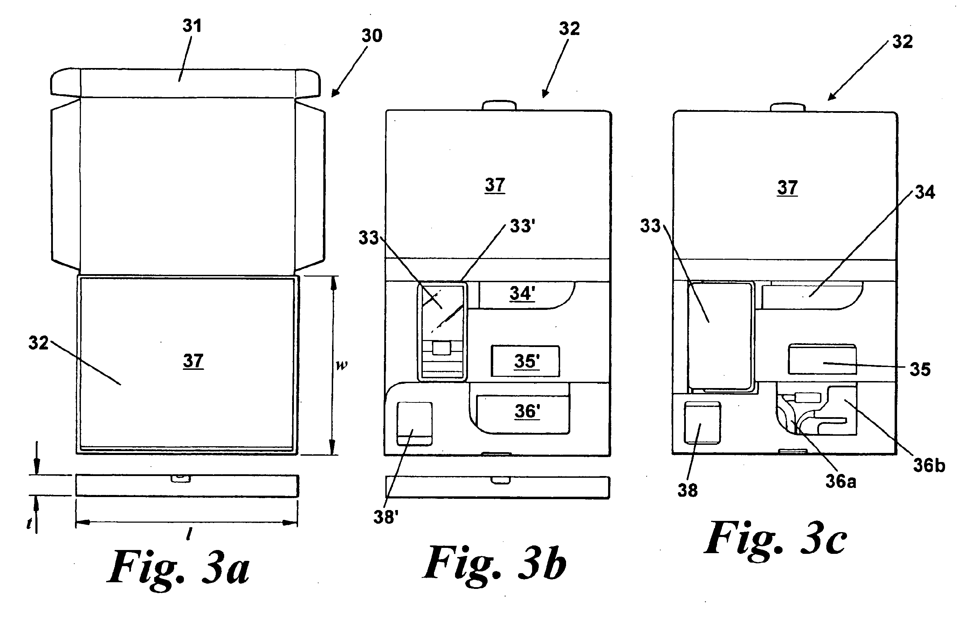

A further exemplary embodiment is shown in Figures 3a to 3c, which illustrate a larger version of the type of delivery container shown in Figures 2a to 2c. The delivery container 30 again comprises an outer container 31 and an inner container 32, the outer container 30 being defined by dimensions of length 1, width w and thickness t. Opening the lid 37 of the inner container 32 reveals, in Figures 3b and 3c, various compartments 33', 34', 35', 36', 38' defined therein, into which the various respective components 33, 34, 35, 36, 38 can fit. In the example shown, the various components, in addition to the mobile telephone 33, may be a paper / electronic user guide and/or software stored, for example, on cd-rom 34, a headset 35, a battery and/or MMC 38 and a cable and/or charger 36a, 36b. The increased size of the container 30 allows for the accommodation of the cable 36a, and charger 36b in this case, not present in the container 20 of Figures 2a to 2c.

To be able to pass through a standard sized opening in a letter box, a cross-section of an outer container of the delivery container of the invention must be smaller than the opening. A maximum package size of, for example, 30 mm x 250 mm x 350mm is envisaged be able to fit through a substantial proportion of standard sized letter box openings. The delivery container of the invention is therefore preferably no larger than this maximum package size. Alternatively, the smallest linear dimension t of the delivery container is no greater than approximately 30 mm, so that the container will readily pass through most letter box openings. Exemplary dimensions for the delivery container 30 of Figures 3a to 3c are t=30mm, w=225mm and 1=280mm, or alternatively t=30mm, w=185mm and 1=280mm.

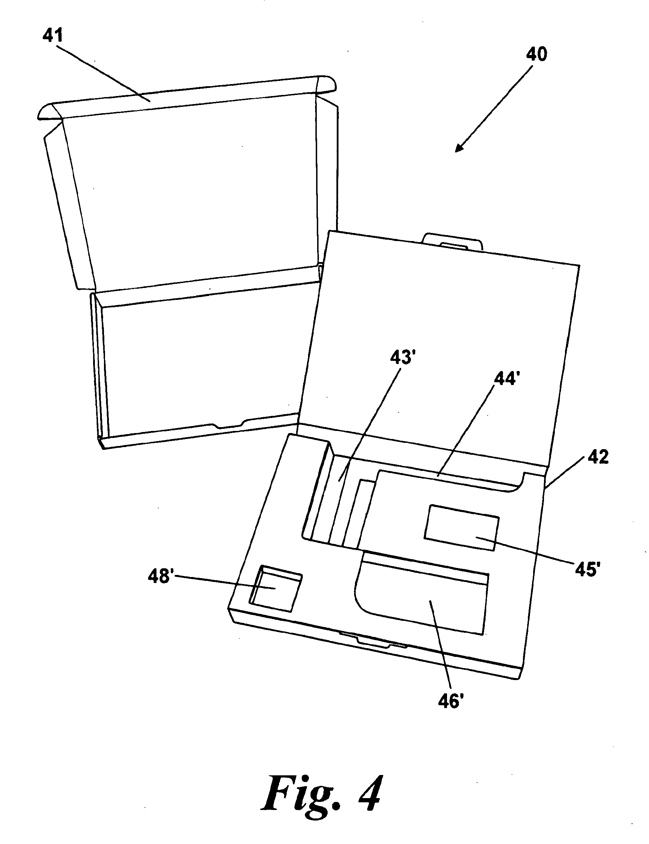

Shown in Figure 4 is 3-dimensional view of an exemplary embodiment of a delivery container 40 similar to that shown in Figures 3a to 3c. The outer container 41 and the inner container 42 are shown separated, and the various compartments 43', 44', 45', 46', 48' within the inner container are also shown.

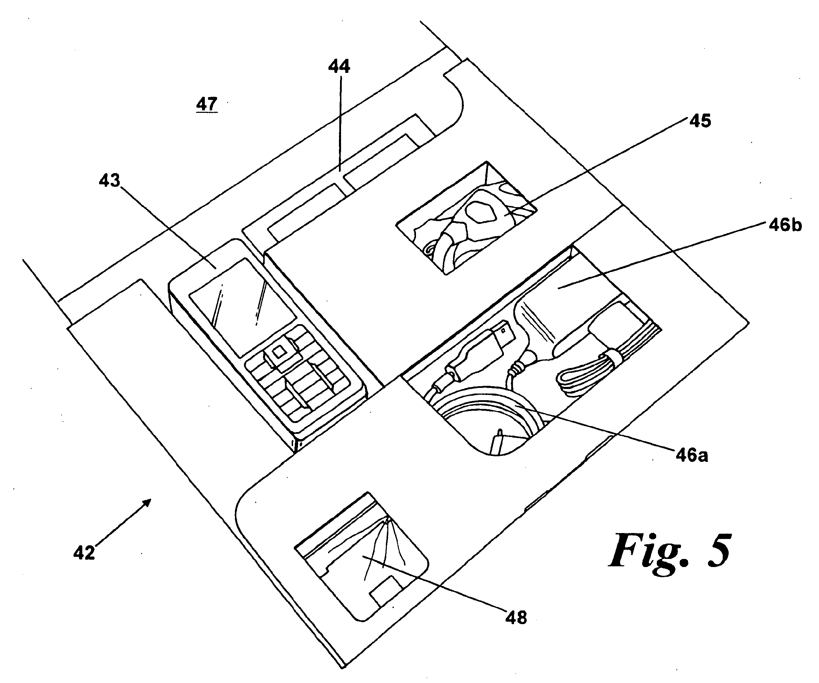

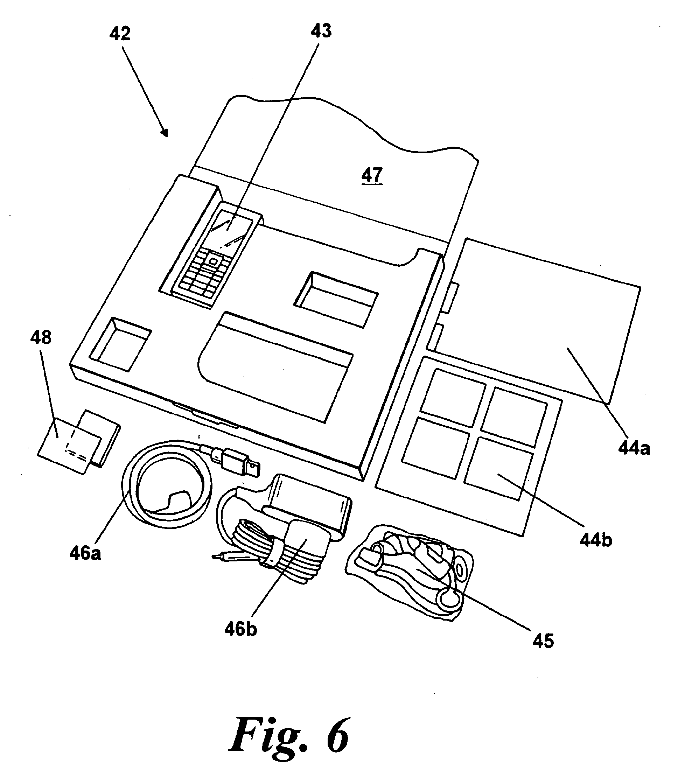

The inner container 42 of the embodiment shown in Figure 4 is further illustrated in Figure 5, which shows an exemplary layout of components within the inner container 42 with lid 47 opened. The various components 43, 44, 45, 46a, 46b, 48 are shown within their respective compartments 43', 44', 45', 46', 48'. These components are further illustrated in Figure 6, which shows the user manual 44a, cd-rom 44b, headset 45, charger 46b, cable 46a and battery/MMC 48 outside the inner container 42, and the mobile telephone 43 within the container 42.

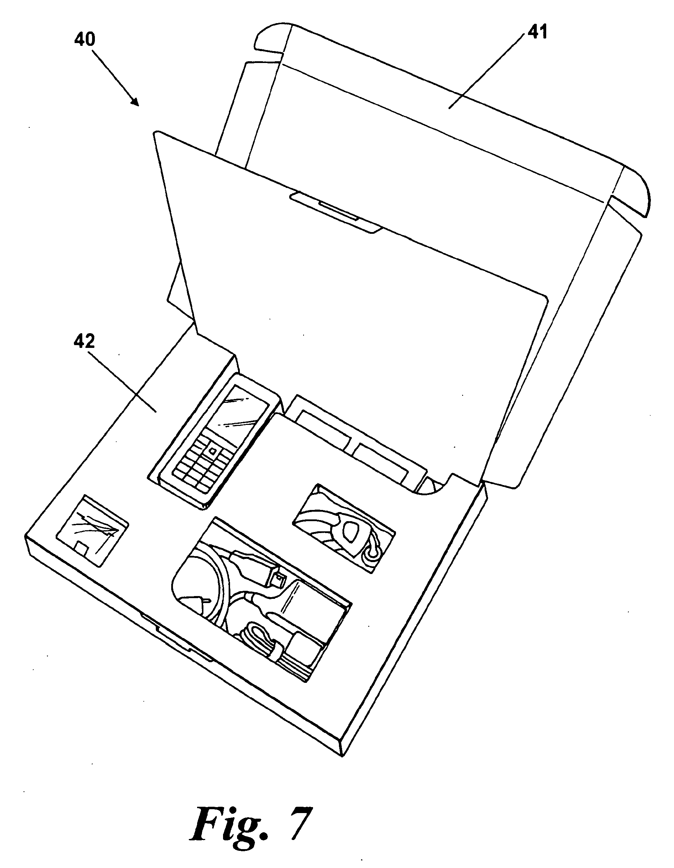

In Figure 7, delivery container 40 is shown where the inner container 42 is in position within the outer container 41, the view corresponding to that presented to a user upon opening the delivery container 40.

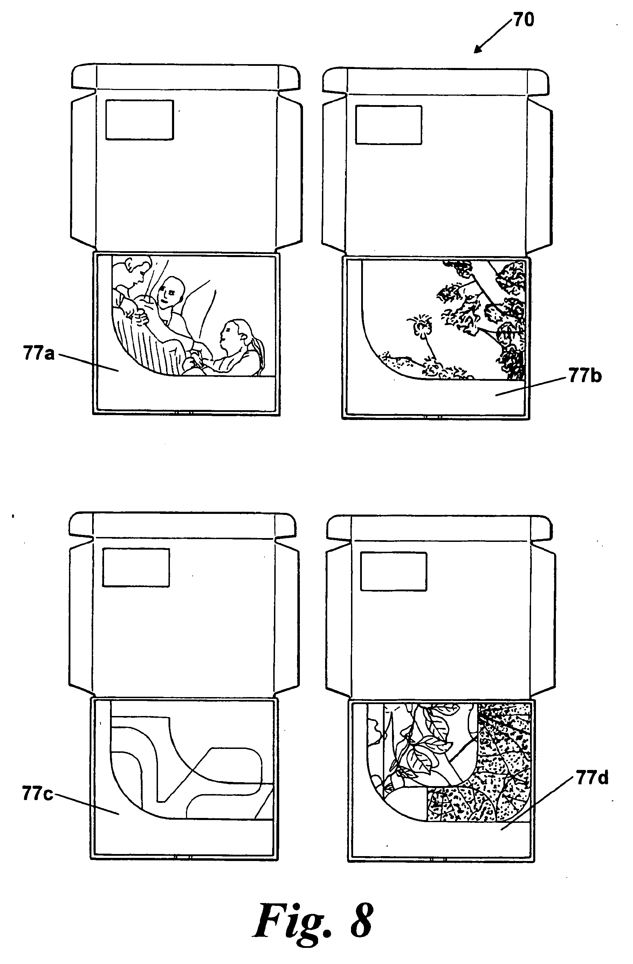

As well as an aesthetically pleasing layout of components within the delivery container 20, 30, 40, one embodiment of the invention allows for different graphical designs to be used on, for example, the external surface of the lid 27, 37, 47 (shown in Figures 2, 3, 5 and 6) of the inner container 20, 30, 40. As shown in Figure 8, an external surface of the inner container lid 77a-d may be provided with various graphical designs, which may have a consistent branded theme. These designs may be printed on to the external surface of the inner container 22, 32, 42 or be adhered to the external surfaces of the inner container 22, 32, 42.

Additionally, the graphical design of the inner container 20, 30, 40 may be chosen or determined by a user, who may for example be a user of an online ordering service for mobile telephones. A user may choose from a selection of graphical designs from an ordering website when choosing the mobile telephone to purchase. Alternatively, the user may choose a personalised graphical design, which may incorporate one or more designs or photographs uploaded from the user to the server of the website. The inner container 20, 30, 40 may then be personalised to the user.

In practice, a user may access a website of a server to browse for a mobile telephone which the user wishes to buy, the website enabling the user to place an order for the mobile telephone. The user may also be able to place an order over the telephone by, for example, calling a call centre. The server may belong to the manufacturer or alternatively to a network operator or another retail operator. After having made a selection, the user transmits an order for the mobile telephone the user wishes to purchase, the order being received by the server. The order may alternatively be received by the server as a result of input by a call centre operator. The order received will comprise, amongst other details, a postal address of an end user of the mobile telephone. The end user may or may not be the same as the user of the website.

After receiving the order from the user, the server transmits, either directly or through an intermediary, details of the order including the postal address of the end user to an order fulfilment facility. The order fulfilment facility may be a separate entity from the server, or may be provided within the same location as the server. The purpose of the order fulfilment facility is to provide the mobile telephone ordered by the user, and optionally to personalise the inner container, and to address the delivery container ready for despatch to the end user.

With the outer container of the delivery container having marked on it the postal address of the end user, and containing the inner container with the mobile telephone (and associated components) ordered by the user, the order fulfilment facility then arranges for the delivery container to be delivered to the end user. The delivery container is then delivered to the home of the end user at the postal address provided by passing the delivery container through an opening for postal deliveries, i.e. a letter box opening.

It is to be understood that the above steps from receiving an order to sending the delivery container for delivery to the home of the end user may be carried out under the control of a suitably programmed computer, which computer may also be the server. The process may thereby be partially or wholly automated once an order has been sent by the user.

Optionally, the order fulfilment facility may be provided by the manufacturer with multiple identical packages of delivery containers containing mobile telephones and associated components. The order fulfilment facility, which may be an operator warehouse (the operator being, for example, a mobile telephone network operator), may then provide personalised items in each delivery container together with the operator's own information and branded literature, in addition to adding the home address details of the end user to the outer container.

If will be evident to a person skilled in the art that various modifications may be made within the scope of the invention.

For example, the outer container 21, 31, 41 of the delivery container 20, 30, 40 may be adapted to be weather proof. The outer container 21, 31, 41 may be provided with a plain printed design, for example consisting only of printed information essential for tracking and delivery purposes, while the inner container 22, 32, 42 may be provided with a more elaborate and colourful printed design. Alternatively or additionally, the outer container 21, 31, 41 may be non-branded, while the inner container 22, 32, 42 is branded with one or more indicia of, for example, the manufacturer and/or network operator. The inner container 22, 32, 42 may provide additional structural strength to the outer container 21, 31, 41. The inner container 22, 32, 42 may be in a 'folder' configuration, where the inner container is adapted to be opened by means of a hinged lid 27, 37, 47.

The materials from which the delivery container 20, 30, 40 is made may comprise recyclable or recycled materials, and these materials may be substantially entirely paper-based.

The compartments 23', 24', 25', 26', 33', 34', 35', 36', 38' may be designed and made to be modular, i.e. adapted to fit a range of standard size telephones and accessory items. The modularity may be enabled by allowing a blank for an inner container 22, 32, 42 to be folded in a plurality of configurations, so as to accommodate a range of mobile telephones and / or accessories. For example, differently sized compartments within the inner container may be achieved by folding the blank in different configurations.

According to the present invention one of the two or more compartments 93' is adapted to be adjustable to receive therein one of a selected range of different sizes of user-portable radio telephones 23, and another of the two or more of the compartments 94 is configurable in either of a closed configuration and an open configuration, the open configuration being adapted to receive one or more accessories therein.

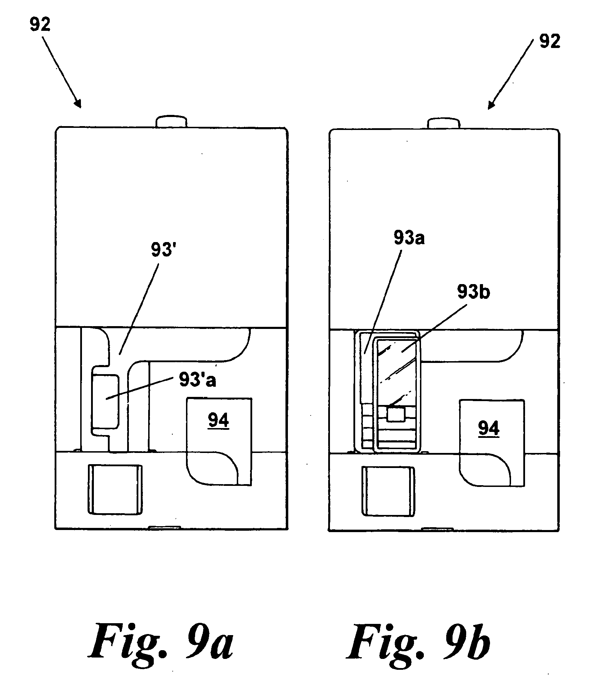

Shown in Figure 9a is an exemplary inner container illustrating adustable compartments 93',94, comprising an adjustable mobile telephone compartment 93' and an adjustable accessory compartment 94. The mobile telephone compartment 93' is adjustable by way of a foldable flap 93'a. With the flap 93'a in a closed position, the adjustable compartment 93' is suitable for receiving a first size of mobile telephone 93a, shown in Figure 9b. With the flap 93'a in an open position, the adjustable compartment 93' is suitable for receiving a second smaller size of mobile telephone 93b.

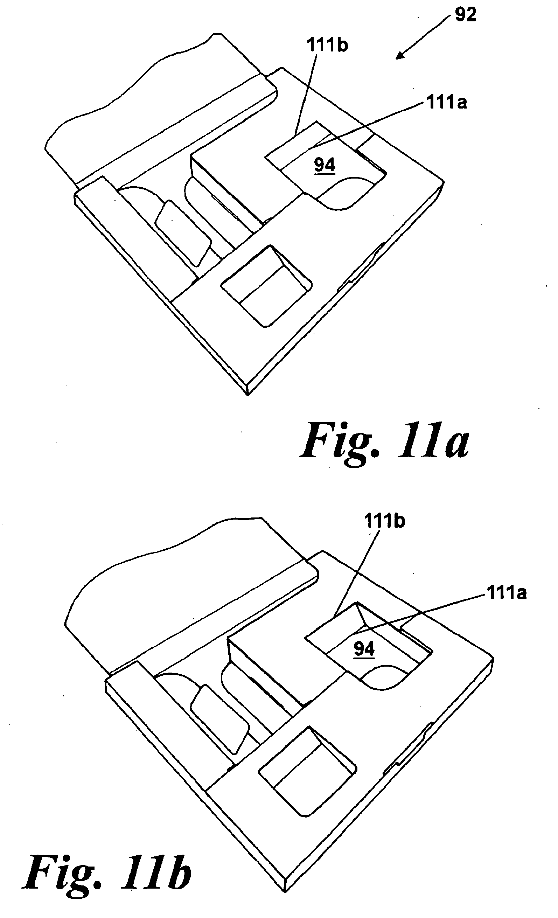

The inner container 92 of Figures 9a and 9b further comprises an adjustable accessory compartment 94, the purpose of which is described below in relation to Figures 11a and 11b.

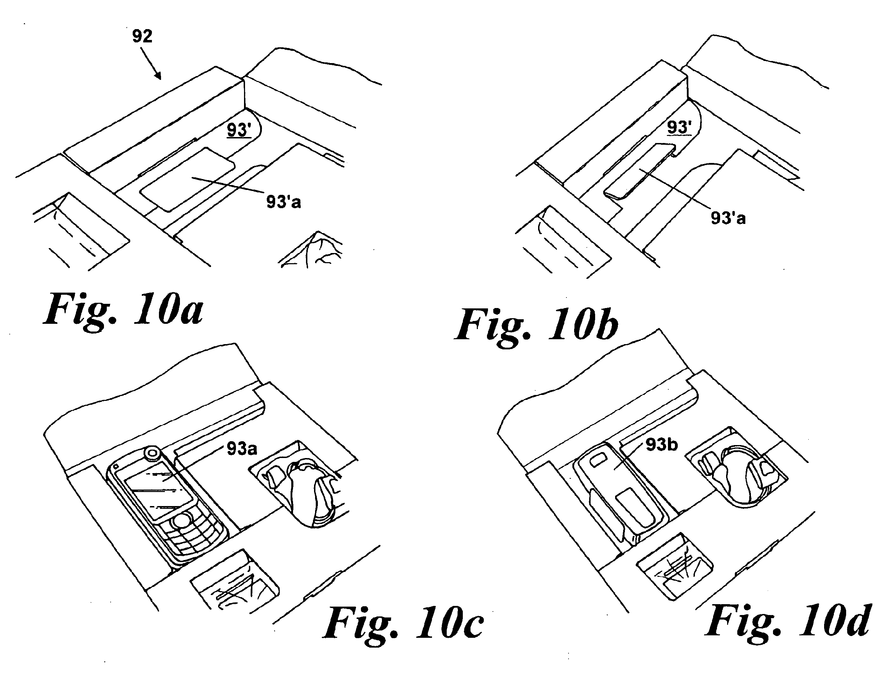

Shown in Figures 10a and 10b is the foldable flap 93'a of the adjustable mobile telephone compartment 93'a. In Figure 10a the foldable flap 93'a is in the closed position, and in Figure 10b the foldable flap 93'a is in the open position. The compartment 93' in the closed position is shown in Figure 10c with a mobile telephone 93a of a first size received therein. The compartment 93' in the open position is shown in Figure 10d with a mobile telephone 93b of a second smaller size received therein.

It is to be understood that the mobile telephone compartment 93' may be adjustable to further accommodate more than two different sizes of mobile telephones 93a, 93b, for example by means of further foldable flaps 93'a therein.

In a general aspect therefore, the inner container 92 is adapted to be adjustable to receive in a compartment 93' therein one of a selected range of different sizes of mobile telephones. In particular, the compartment 93' may comprise one or more foldable flaps 93'a to adjust the compartment 93' for receiving the selected size of mobile telephone.

The inner container 92 further comprises one or more adjustable accessory compartments 94, as shown in Figures 9a and 9b, and in Figures 11a and 11b. In Figure 11a the adjustable compartment 94 is shown in a closed configuration. This closed configuration is, for example, suitable for when an open compartment is not required for a particular accessory, which is not to be included within the delivery container. Shown in Figure 11b is the adjustable compartment 94 in an open configuration. The compartment 94 is then suitable for receiving one or more particular accessories for the mobile telephone to be contained within the inner container 92. The compartment 94 may be formable from the closed configuration to the open configuration by being folded along crease lines 111a, 111b.

In a general aspect therefore, the inner container comprises one or more adjustable compartments 94, the compartments 94 being configurable in a closed configuration and an open configuration, the open configuration adapted to receive one or more accessories therein.

## Claims

1. A delivery container (20) for delivering a user-portable radio telephone, the delivery container (20) comprising:
an inner container (92);
an outer container (21) adapted to entirely enclose the inner container (92),
the inner container (92) having two or more compartments (93', 94) defined therein, wherein one of the two or more compartments (93') is adapted to be able to contain a user-portable radio telephone (23) and is adapted to be adjustable to receive therein one of a selected range of different sizes of user-portable radio telephones, **characterised in that** another of the two or more of the compartments (94) is configurable in either of a closed configuration and an open configuration, the open configuration being adapted to receive one or more accessories therein; and
the outer container (21) adapted to pass through a 30 mm x 250 mm size of opening of a letter box for postal deliveries at a home of an end user of the user-portable radio telephone (23).

2. The delivery container (20) of claim 1 wherein the outer container (21) is of a substantially cuboid shape.

3. The delivery container (20) of claim 1 wherein the inner container (92) and the two or more compartments (93', 94) defined therein are formed from a unitary piece.

4. The delivery container (20) of claim 3 wherein the unitary piece comprises a substantially planar blank of packaging material.

5. The delivery container (20) of claim 4 wherein the unitary piece is adapted to be folded in a plurality of configurations.

6. The delivery container (20) of claim 1 wherein said one of the two or more compartments (93') comprises one or more foldable flaps (93'a) to adjust the compartment for receiving a selected size of mobile telephone (93a).

7. The delivery container (20) of claim 1 wherein said another of the two or more compartments (94) is formable between the closed configuration and the open configuration by folding along one or more crease lines.

8. The delivery container (20) of claim 1 wherein the maximum dimensions for the delivery container are smaller than 30 mm x 250mm x 400 mm.

9. A blank for the delivery container (20) of claim 1, the blank comprising a substantially planar unitary piece of packaging material adapted to, when assembled, form a user-portable radio telephone container, the container comprising:
an inner container (92);
an outer container (21) adapted to entirely enclose the inner container (92),
the inner container (92) having two or more compartments (93', 94) defined therein, wherein one of the two or more compartments (93') is adapted to be able to contain a user-portable radio telephone (23) and is adapted to be adjustable to receive therein one of a selected range of different sizes of user-portable radio telephones, and wherein another of the two or more of the compartments (94) is configurable in either of a closed configuration and an open configuration, the open configuration being adapted to receive one or more accessories therein, and
the outer container (21) adapted to pass through a 30 mm x 250 mm size of opening of a letter box for postal deliveries at a home of an end user of the user-portable radio telephone (23).

10. A method of delivering a user-portable radio telephone to an end user, the method comprising:
receiving from a user at a server an order for a user-portable radio telephone (23), the order comprising a postal address of the end user of the user- portable radio telephone;
transmitting from the server to the order fulfilment facility the postal address of the end user;
providing at the order fulfilment facility a delivery container (20) containing the user-portable radio telephone (23), the delivery container comprising;
an inner container (92);
an outer container (21) entirely enclosing the inner container (92),
the inner container having two or more compartments (93',94) defined therein, wherein one of the two or more compartments (93') is adapted to contain the user-portable radio telephone (23) and is adapted to be adjustable to receive therein one of a selected range of different sizes of user-portable radio telephones and wherein another of the two or more of the compartments (94) is configurable in either of a closed configuration and an open configuration, the open configuration being adapted to receive one or more accessories therein, the outer container adapted to pass through a 30 mm x 250 mm size of opening of a letter box for postal deliveries at a home of the end user of the user-portable radio telephone and the outer container (21) being marked with the postal address of the end user,

11. The method of claim 10 further comprising sending for delivery the delivery container (20) containing the user-portable radio telephone to the home of the end user.

12. The method of claim 10, the method further comprising accessing by the user a website of a server, the website being adapted to receive the order from the user.

13. The method of claim 10, the method further comprising delivering the delivery container (20) at the home of the end user, delivering the delivery container comprising passing the delivery container through an opening for postal deliveries at the home of the end user.

## Patentansprüche

1. Lieferbehälter (20) zum Liefern eines benutzertragbaren Funktelefons, wobei der Lieferbehälter (20) umfasst:
einen Innenbehälter (92);
einen Außenbehälter (21), der angepasst ist, den Innenbehälter (92) vollständig zu umschließen, wobei der Innenbehälter (92) zwei oder mehrere Abteile (93', 94) aufweist, die darin definiert sind, wobei eines der zwei oder mehreren Abteile (93') angepasst ist, um in der Lage zu sein, ein benutzertragbares Funktelefon (23) zu enthalten und angepasst ist, einstellbar zu sein, um darin eines aus einem ausgewählten Bereich verschiedener Größen benutzertragbarer Funktelefone aufzunehmen,
**dadurch gekennzeichnet, dass**
ein weiteres der zwei oder mehreren Abteile (94) entweder in eine geschlossene Konfiguration oder in eine offene Konfiguration konfiguriert werden kann, wobei die offene Konfiguration angepasst ist, um ein oder mehrere Zubehörteile darin aufzunehmen; und
der Außenbehälter (21) angepasst ist, um durch eine 30mm x 250mm große Öffnung eines Briefkastens für Postlieferungen an einem Wohnsitz eines Endbenutzers des tragbaren Funktelefons (23) hindurchzugehen.

2. Lieferbehälter (20) gemäß Anspruch 1, wobei der Außenbehälter (21) eine im Wesentlichen quaderförmige Gestalt aufweist.

3. Lieferbehälter (20) gemäß Anspruch 1, wobei der Innenbehälter (92) und die darin definierten zwei oder mehreren Abteile (93', 94) aus einem einheitlichen Teil geformt sind.

4. Lieferbehälter (20) gemäß Anspruch 3, wobei das einheitliche Teil einen im Wesentlichen ebenen Rohling aus Packmaterial umfasst.

5. Lieferbehälter (20) gemäß Anspruch 4, wobei das einheitliche Teil angepasst ist, in mehrere Konfigurationen gefaltet zu werden.

6. Lieferbehälter (20) gemäß Anspruch 1, wobei das eine der zwei oder mehreren Abteile (93') ein oder mehrere faltbare Laschen (93'a) umfasst, um das Abteil zum Aufnehmen einer ausgewählten Größe eines Mobiltelefons (93a) einzustellen.

7. Lieferbehälter (20) gemäß Anspruch 1, wobei das andere der zwei oder mehreren Abteile (94) zwischen der geschlossenen Konfiguration und der offen Konfiguration durch Falten entlang einer oder mehrerer Faltlinien, geformt werden kann.

8. Lieferbehälter (20) gemäß Anspruch 1, wobei die Maximalabmessungen des Lieferbehälters kleiner als 30 mm x 250 mm x 400 mm sind.

9. Rohling für den Lieferbehälter (20) gemäß Anspruch 1, wobei der Rohling ein im Wesentlichen ebenes einheitliches Teil von Verpackungsmaterial umfasst, das angepasst ist, wenn es gefertigt ist, einen Behälter für ein benutzertragbares Funktelefon zu bilden, wobei der Behälter umfasst:
einen Innenbehälter (92);
einen Außenbehälter (21), der angepasst ist, den Innenbehälter (92) vollständig zu umschließen, wobei der Innenbehälter (92) zwei oder mehrere Abteile (93', 94) aufweist, die darin definiert sind, wobei eines der zwei oder mehreren Abteile (93') angepasst ist, um in der Lage zu sein, ein benutzertragbares Funktelefon (23) zu enthalten und angepasst ist, einstellbar zu sein, um darin eines von einem ausgewählten Bereich verschiedener Größen benutzertragbarer Funktelefone aufzunehmen, und
wobei ein weiteres der zwei oder mehreren Abteile (94) entweder in eine geschlossene Konfiguration oder in eine offene Konfiguration konfiguriert werden kann, wobei die offene Konfiguration angepasst ist, um ein oder mehrere Zubehörteile darin aufzunehmen; und
der Außenbehälter (21) angepasst ist, um durch eine 30 mm x 250 mm große Öffnung eines Briefkastens für Postlieferungen an einem Wohnsitz eines Endbenutzers des tragbaren Funktelefons (23) hindurchzugehen.

10. Verfahren zum Liefern eines benutzertragbaren Funktelefons an einen Endbenutzer, wobei das Verfahren umfasst:
Empfangen einer Bestellung eins benutzertragbaren Funktelefons (23) von einem Benutzer an einem Server, wobei die Bestellung eine Postanschrift des Endbenutzers des benutzertragbaren Funktelefons umfasst;
Übertragen der Postanschrift des Endbenutzers von dem Server an eine Bestellungsausführungseinrichtung;
Bereitstellen eines Lieferbehälters (20), der das benutzertragbare Funktelefon (23) enthält, an der Bestellungsausführungseinrichtung, wobei der Lieferbehälter umfasst:
einen Innenbehälter (92);
einen Außenbehälter (21), der den Innenbehälter (92) vollständig umschließt, wobei der Innenbehälter zwei oder mehrere Abteile (93', 94) aufweist, die darin definiert sind, wobei eines der zwei oder mehreren Abteile (93') angepasst ist, um das benutzertragbare Funktelefon (23) zu enthalten und angepasst ist, einstellbar zu sein, um darin eines von einem ausgewählten Bereich verschiedener Größen benutzertragbarer Funktelefone aufzunehmen, und
wobei ein weiteres der zwei oder mehreren Abteile (94) entweder in eine geschlossene Konfiguration oder in eine offene Konfiguration konfiguriert werden kann, wobei die offene Konfiguration angepasst ist, um ein oder mehrere Zubehörteile darin aufzunehmen; und
wobei der Außenbehälter angepasst ist, um durch eine 30 mm x 250 mm große Öffnung eines Briefkastens für Postlieferungen an einem Wohnsitz des Endbenutzers des benutzertragbaren Funktelefons hindurchzugehen, und
wobei der Außenbehälter (21) mit der Postanschrift des Endbenutzers kenntlich gemacht ist.

11. Verfahren gemäß Anspruch 10, weiter umfassend Verschicken des Lieferbehälters (20), der das benutzertragbare Funktelefon enthält, an den Wohnsitz des Endbenutzers zur Lieferung.

12. Verfahren gemäß Anspruch 10, wobei das Verfahren weiter umfasst Zugreifen auf eine Website eines Servers durch den Benutzer, wobei die Website angepasst ist, die Bestellung von dem Benutzer zu empfangen.

13. Verfahren gemäß Anspruch 10, wobei das Verfahren weiter umfasst Liefern des Lieferbehälters (20) an dem Wohnsitz des Endbenutzers, wobei das Liefern des Lieferbehälters das Hindurchführen des Lieferbehälters durch eine Öffnung für Postlieferungen an dem Wohnsitz des Endbenutzers umfasst.

## Revendications

1. Conteneur de distribution (20) pour distribuer un téléphone portatif sans fil, le conteneur de distribution (20) comprenant :
un conteneur interne (92) ;
un conteneur externe (21) adapté pour enfermer entièrement le conteneur interne (92),
le conteneur interne (92) ayant deux compartiments (93', 94) ou plus, définis à l'intérieur de ce dernier, dans lequel l'un des deux compartiments (93') ou plus est adapté pour pouvoir contenir un téléphone portatif sans fil (23) et est adapté pour être ajustable afin de recevoir à l'intérieur de ce dernier, une des tailles de téléphone parmi une gamme sélectionnée de tailles différentes de téléphones portatifs sans fil,
**caractérisé en ce qu'**un autre des deux compartiments (94) ou plus peut être configuré en une configuration fermée et une configuration ouverte, la configuration ouverte étant adaptée pour recevoir un ou plusieurs accessoires à l'intérieur de ce dernier ; et
le conteneur externe (21) est adapté pour passer par une taille d'ouverture de 30 mm x 250 mm d'une boîte aux lettres pour les distributions postales au domicile d'un utilisateur final du téléphone portatif sans fil (23).

2. Conteneur de distribution (20) selon la revendication 1, dans lequel le conteneur externe (21) a une forme sensiblement cuboïde.

3. Conteneur de distribution (20) selon la revendication 1, dans lequel le conteneur interne (92) et les deux compartiments (93', 94) ou plus définis à l'intérieur de ce dernier, sont formés à partir d'une pièce unitaire.

4. Conteneur de distribution (20) selon la revendication 3, dans lequel la pièce unitaire comprend une découpe sensiblement plane de matériau d'emballage.

5. Conteneur de distribution (20) selon la revendication 4, dans lequel la pièce unitaire est adaptée pour être pliée selon une pluralité de configurations.

6. Conteneur de distribution (20) selon la revendication 1, dans lequel ledit un parmi les deux compartiments (93') ou plus comprend un ou plusieurs rabats pliables (93'a) pour ajuster le compartiment afin de recevoir une taille sélectionnée de téléphone mobile (93a).

7. Conteneur de distribution (20) selon la revendication 1, dans lequel ledit autre parmi les deux compartiments (94) ou plus peut être formé entre la configuration fermée et la configuration ouverte en pliant le long d'une ou de plusieurs lignes de pli.

8. Conteneur de distribution (20) selon la revendication 1, dans lequel les dimensions maximum pour le conteneur de distribution sont inférieures à 30 mm x 250 mm x 400 mm.

9. Découpe pour le conteneur de distribution (20) selon la revendication 1, la découpe comprenant une pièce unitaire sensiblement plane de matériau d'emballage adaptée pour, lorsqu'elle est assemblée, former un conteneur de téléphone portatif sans fil, le conteneur comprenant :
un conteneur interne (92) ;
un conteneur externe (21) adapté pour contenir entièrement le conteneur interne (92),
le conteneur interne (92) ayant deux compartiments (93', 94) ou plus, définis à l'intérieur de ce dernier, dans lequel l'un des deux compartiments (93') ou plus est adapté pour pouvoir contenir un téléphone portatif sans fil (23) et est adapté pour être ajustable afin de recevoir à l'intérieur de ce dernier, une des tailles de téléphone parmi une gamme sélectionnée de tailles différentes de téléphones portatifs sans fil, et dans laquelle un autre des deux compartiments (94) ou plus peut être configuré en une configuration fermée et une configuration ouverte, la configuration ouverte étant adaptée pour recevoir un ou plusieurs accessoires à l'intérieur de ce dernier ; et
le conteneur externe (21) est adapté pour passer par une taille d'ouverture de 30 mm x 250 mm d'une boîte aux lettres pour les distributions postales au domicile d'un utilisateur final du téléphone portatif sans fil (23).

10. Procédé pour distribuer un téléphone portatif sans fil à un utilisateur final, le procédé comprenant les étapes consistant à :
recevoir de la part d'un utilisateur, sur un serveur, une commande pour un téléphone portatif sans fil (23), la commande comprenant une adresse postale de l'utilisateur final du téléphone portatif sans fil ;
transmettre, du serveur au centre d'exécution des commandes, l'adresse postale de l'utilisateur final ;
fournir au centre d'exécution des commandes, un conteneur de distribution (20) contenant le téléphone portatif sans fil (23), le conteneur de distribution comprenant :
un conteneur interne (92) ;
un conteneur externe (21) adapté pour contenir entièrement le conteneur interne (92),
le conteneur interne ayant deux compartiments (93', 94) ou plus, définis à l'intérieur de ce dernier, dans lequel l'un des deux compartiments (93') ou plus est adapté pour pouvoir contenir un téléphone portatif sans fil (23) et est adapté pour être ajustable afin de recevoir à l'intérieur de ce dernier, une des tailles de téléphone parmi une gamme sélectionnée de tailles différentes de téléphones portatifs sans fil, et dans lequel un autre des deux compartiments (94) ou plus peut être configuré en une configuration fermée et une configuration ouverte, la configuration ouverte étant adaptée pour recevoir un ou plusieurs accessoires à l'intérieur de ce dernier, le conteneur externe étant adapté pour passer par une taille d'ouverture de 30 mm x 250 mm d'une boîte aux lettres pour les distributions postales au domicile d'un utilisateur final du téléphone portatif sans fil et le conteneur externe (21) étant marqué avec l'adresse postale de l'utilisateur final.

11. Procédé selon la revendication 10, comprenant en outre l'étape consistant à expédier le conteneur de distribution (20) contenant le téléphone portatif sans fil au domicile de l'utilisateur final.

12. Procédé selon la revendication 10, le procédé comprenant en outre l'étape consistant à ce que l'utilisateur accède à un site Internet d'un serveur, le site Internet étant adapté pour recevoir la commande l'utilisateur.

13. Procédé selon la revendication 10, le procédé comprenant en outre l'étape consistant à distribuer le conteneur de distribution (20) au domicile de l'utilisateur final, l'étape consistant à distribuer le conteneur de distribution comprenant l'étape consistant à faire passer le conteneur de distribution par une ouverture pour les distributions postales au domicile de l'utilisateur final.
